# EUROPEAN PATENT APPLICATION

(11) **EP 4 304 193 A1**
(43) Date of publication of application: **10.01.2024**
(21) Application number: 23181076.3
(22) Date of filing: 22.06.2023
(51) Int. Cl.: H04Q 9/00, A61C 1/00

(54) **POWER SUPPLY DEVICE, KIT, AND OPERATING METHOD**

(30) Priority: 23.06.2022 EP 22180760
(71) Applicant: Braun GmbH, 61476 Kronberg im Taunus (DE)
(72) Inventor: Langsdorf, Jan Christian, Kronberg (DE); Loeper, Jannik, Kronberg (DE); Dietrich, Martin, Kronberg (DE); Contreras, Simon, Kronberg (DE)
(74) Representative: P&G Patent Germany

(57) **Abstract**

A switched mode power supply charging device (50) for an appliance (20, 30, 32) comprises a circuit (60) comprising a wireless interface circuit (92) and operative to obtain appliance-related data for at least one personal care appliance (20, 30, 32) and transmit the appliance-related data over the wireless interface circuit (92).

## Description

### TECHNICAL FIELD

The invention relates to a power supply charging device for supplying charging power to rechargeable batteries of an appliance which comprises, in particular, a personal care appliance. The invention relates in particular, to techniques for enabling communication of appliance-related data. The invention also relates to power supply charging devices, kits and systems comprising a power supply charging device and to operating methods of a power supply charging device, which enable communication of appliance-related data.

### BACKGROUND

Personal care appliances are widely used. Examples for such appliances include hair removal, cutting, or trimming devices (such as shavers, body groomers, epilation devices, etc.) or oral care devices (such as toothbrushes, tongue cleaning devices, or oral shower devices). Many personal care appliances or accessories to be used in association therewith are equipped with electronic components that monitor and record data related to the respective appliance. Some or all of the data may be used for generating an output that is provided via a dedicated user-interface provided on the appliance or on a user terminal that can be communicatively connected to the appliance. Some or all of the data may be used for maintenance or other service-related purposes.

For enhanced user convenience, it would be desirable to provide further improvements in the technical field of communication of appliance-related data, in particular related to personal care appliances.

### SUMMARY

It is an object of the invention to provide improved devices, kits, systems, and methods that facilitate the transmission of data collected by an appliance, in particular a personal care appliance. It is in particular an object of the invention to provide devices, kits, systems, and methods that allow appliance-related data to be transmitted over a desired wireless communication standard (such as a member of the IEEE 802.11 standard family) without requiring (while still allowing) the appliance itself to have the required communication circuitry for that specific communication standard. It is also an object of the invention to provide such devices that can be manufactured in an efficient manner.

These objectives are addressed by a Switched mode power supply charging device of claim 1, a kit of claim 7 and a method of claim 10. Advantageous embodiments are set forth by the subclaims.

According to embodiments of the invention, a switched mode power supply charging device having connector pins for engagement with a mains outlet and an appliance power connector further comprises a circuit operative to obtain and transmit appliance-related data.

A switched mode power supply charging device for an appliance (such as a personal care appliance) in accordance with an embodiment comprises: connector pins operative for engagement with a mains outlet, a power supply cable comprising an appliance power connector, and a circuit comprising a wireless interface circuit and operative to obtain appliance-related data for at least one appliance and transmit the appliance-related data over the wireless interface circuit.

A switched mode power supply charging device for charging a rechargeable battery of a personal care appliance, comprises: connector pins operative for engagement with a mains outlet, a power supply cable comprising an appliance power connector, a power plug housing from which the connector pins project, the power plug housing being attached to an end of the power supply cable opposite to an end on which the appliance power connector is provided, and a circuit comprising an AC/DC switched mode converter and a wireless interface circuit, wherein the power plug housing houses the circuit, wherein the circuit is operative to obtain appliance-related data for at least one personal care appliance via at least one further communication interface different from the wireless interface circuit, and wherein the wireless interface circuit is operative to transmit appliance related data.

A kit according to an embodiment comprises one or several appliances (such as personal care appliances) and the switched mode power supply charging device, wherein the power supply charging device is operative to transmit appliance-related data obtained for at least some of the one or several appliances.

A method of obtaining and transmitting appliance-related data according to an embodiment is performed by a power supply charging device comprising connector pins operative for engagement with a mains outlet, a power supply cable comprising an appliance power connector, and a circuit comprising a wireless interface circuit. The method comprises obtaining, by the circuit, appliance-related data for at least one appliance, and transmitting, by the circuit, the appliance-related data over the wireless interface circuit.

Advantageously, the switched mode power supply battery charger serves not only for charging batteries of a personal care device but also as a data hub. The charger comprises a wireless interface circuit for transmitting data. The chargers also comprise a cable which is connectable with the personal care appliance and works one way just for charging or bidirectionally, i.e. in a first direction from the charger to the personal care appliance for charging the personal care appliance and in the opposite direction for obtaining data of the personal care appliance to the charger. This data is then further transmitted by the integrated wireless interface circuit via internet connections for further usage or analysis. As a result, the personal care appliance does no longer require any wireless interface circuit. Optionally or alternatively the personal care appliance comprises a communication interface different from the wireless interface circuit for obtaining data from one or more appliances wired (e.g. by the above charger cable) and/or wireless (e.g. by Bluetooth).

### BRIEF DESCRIPTION OF THE DRAWINGS

Embodiments will be described with reference to the drawings in which identical or corresponding reference signs designate identical or corresponding elements.
Figure 1 shows a system comprising a power supply charging device.
Figure 2 is a flow chart of an operation method of the power supply charging device.
Figure 3 is a flow chart of an operation method of the power supply charging device.
Figure 4 is a flow chart of an operation method of the power supply charging device.
Figure 5 is a flow chart of an operation method of the power supply charging device.
Figure 6 is a block diagram of a circuit of the power supply charging device.
Figure 7 is a plan view of the power supply charging device.
Figure 8 is a block diagram of a communication circuit of the power supply charging device.
Figure 9 is a block diagram of a communication circuit of the power supply charging device.
Figure 10 is a detail view of a power supply charging device.
Figure 11 shows a system comprising a power supply charging device.
Figure 12 shows a system comprising a power supply charging device.
Figure 13 is a flow chart of an operation method of the power supply charging device.
Figure 14 is a flow chart of a method.
Figure 15 is a flow chart of a method of configuring a power supply charging device.
Figure 16 is a flow chart of a method of enabling access to appliance-related data.
Figure 17 shows a power supply charging device.
Figure 18 shows a power supply charging device.

### DETAILED DESCRIPTION OF EMBODIMENTS

Embodiments will be described with reference to the drawings. Features of embodiments may be combined with each other unless explicitly stated otherwise.

While embodiments will be described in association with power supply charging devices for personal care appliances, and in association with systems, kits, and methods that may involve personal care appliances, the techniques are not limited thereto. For illustration, the power supply charging device may be operative for supplying a home appliance with power which may but does not need to be a personal care appliance. Kitchen appliances are examples for such appliances.

Embodiments of the invention relate to power supply charging devices as well as kits, systems, and methods associated therewith. The power supply charging device has communication capability. The power supply charging device is operative to obtain and transmit appliance-related data.

As used herein, the phrases "power supply" or "supplying with power" encompasses the provision of electric energy to an appliance for live use of the appliance (e.g., for using the supplied power for driving an electromechanical actuator) and the provision of electric energy to an appliance for charging a battery that may optionally be present.

Power supply charging devices may take various forms and configurations, such as, without limitations, power cords and/or more complex power supply charging devices that include a frame that both supports the appliance during charging and/or cleaning and provides power to the appliance.

The communication capabilities of the power supply charging device may be used not only in association with appliances which the power supply charging device can supply with electric power, but also in association with appliances that may require a different type of electric power supply charging device and/or that may not require any electric power because, e.g., they do not include any electromechanical actuator.

The "appliance-related data" obtained and transmitted by the power supply charging device may be or may comprise any one or any combination of:
- data related to the appliance with which the power supply charging device is engaged or otherwise coupled for providing electric power thereto,
- data related to an appliance with which the power supply charging device is mechanically engageable or otherwise couplable for providing electric power thereto but is not engaged therewith during the data transmission, and/or
- data related to an appliance with which the power supply charging device is not mechanically engageable or couplable for providing electric power thereto.

A power supply charging device for an appliance in accordance with an embodiment comprises connector pins operative for engagement with a mains outlet, a power supply cable comprising an appliance power connector, and a circuit comprising a wireless interface circuit and operative to obtain appliance-related data for at least one appliance and transmit the appliance-related data over the wireless interface circuit. Alternatively or additionally, the circuit may be operative to receive data and to provide the data, possibly after processing, to one or several personal care appliances, using wired or wireless communication.

Integration of the circuit (that is operative to obtain and transmit appliance-related data) into the power supply charging device allows the appliance-related data to be transmitted to, e.g., a wide area network (WAN) and/or to a user terminal without requiring (while still allowing) an interface for communication with the WAN to be present in the appliance itself and without requiring the user to communicatively couple a terminal device (such as a cellular telephone, wearable, tablet, or portable or stationary computer) to the appliance for transmission of the appliance-related data.

The power supply charging device may be a power supply charging device for a personal care appliance. This facilitates the use of the power supply charging device in association with personal care appliances. Users tend to have various personal care appliances for everyday use, and not all (or not even any of them) may be equipped with a desired wireless data communication capability (e.g., communication with a server connected to a WAN). The power supply charging device affords this communication capability.

The power supply charging device may be a power supply charging device for a home appliance, such as a household appliance. This facilitates the use of the power supply charging device in association with home appliances. Users tend to have various home appliances for everyday use, and not all (or not even any of them) may be equipped with a desired wireless data communication capability (e.g., communication with a server connected to a WAN). The power supply charging device affords this communication capability.

The circuit may be arranged within a power plug housing that is operative for engagement with the mains outlet. The connector pins may project from the power plug housing. The power plug housing and the appliance power connector may be arranged on opposite ends of the power supply cable.

Providing the circuit at the power plug housing provides ease of manufacture and facilitates recyclability. For illustration, the circuit may be mounted on (and externally of) a water-tight shell of the power plug housing in which a converter is housed. Failure of the circuit that has communication capability allows the circuit to be replaced while allowing the converter to be recycled. Failure of the converter allows the circuit that has communication capability to be disassembled from the broken converter and combined with an operational converter. Ease of configurability is attained, because power plugs may be selectively provided with communication capability when desired.

The circuit may comprise a converter operative to perform a voltage down-conversion. This allows a voltage level safe for an end user to be output at the appliance power connector. This also allows one or several integrated circuit(s) (IC(s)) of the circuit and/or the wireless interface circuit to be fed with the down-converted voltage provided by the converter.

The converter may comprise a galvanic separation (e.g., by means of a transformer). This allows a galvanic separation to be implemented between the connector pins and the appliance power connector.

The converter may be an AC/DC converter. This facilitates use of the power supply charging device for personal care appliances that require DC supply.

The converter may be a switched mode power supply (SMPS). This facilitates use of the power supply charging device for deriving an operation power of the appliance from the voltage of a mains outlet.

The circuit may comprise a communication circuit connected to an output of the converter. The communication circuit may comprise the wireless interface circuit. This allows the circuit and its wireless interface circuit(s) to be powered by the output of the converter. The output of the converter may also supply the power for use by the appliance. Power supplied to the appliance may be passed through the circuit.

The circuit may be operative to obtain and transmit appliance-related data for one or several personal care appliances. This facilitates the use of the power supply charging device in association with personal care appliances. Users tend to have various personal care appliances for everyday use, and not all (or not even any of them) may be equipped with a desired wireless data communication capability (e.g., communication with a server connected to a WAN). The power supply charging device affords this communication capability.

The circuit may be operative to obtain at least some of the appliance-related data for a personal care appliance while the personal care appliance is being engaged with the appliance power connector, and/or to obtain at least some of the appliance-related data for one or several second personal care appliances while the appliance power connector is engaged with a first personal care appliance different from the one or several second personal care appliances. This allows the power supply charging device to act as a communication hub that enables communication between personal care appliance(s) and, e.g., a computing device remote from the personal care appliances via a wireless communication technology.

The circuit may be operative to obtain some or all of the appliance-related data via at least one further communication interface different from the wireless interface circuit.

The at least one further communication interface may comprise a wired communication circuit that is operative to obtain the appliance related data via conductors that are also operative to supply power to the appliance. Additionally or alternatively, at least one further communication interface may comprise a further wireless interface circuit different from the wireless interface circuit. This allows the power supply charging device to obtain appliance-related data for transmission from one or several appliances, without requiring the appliance(s) to support the communication technique that is used by the power supply charging device to transmit the appliance-related data.

The circuit may be operative to transmit data received at the wireless interface circuit to the personal care appliance. This allows data for configuring the personal care appliance, firmware or software updates for the personal care appliance, or other data to be provided to the personal care appliance via the power supply charging device, without requiring the personal care appliance itself to have an interface that allows the appliance to access the repository at which the configuration data, firmware or software updates are stored.

The circuit may be operative for one- or bi-directional communication with the personal care appliance.

The one- or bi-directional communication with the personal care appliance may be established via the at least one further communication interface. The bi-directional communication capability may be used to provide, by the power supply charging device, data for configuring the personal care appliance, update data for the personal care appliance, or other data to the personal care appliance.

The power supply charging device may comprise a water-tight shell from which the connector pins project. The water-tight shell may contain therein a converter, such as an AC/DC converter. The water-tight shell may have an IPX rating of IPX4 or higher, without being limited thereto. Safety during use in environments frequently encountered for personal care appliances (such as shaving or oral care devices) is thereby attained.

The water-tight shell may have an outer surface, and the circuit may be mounted on the outer surface of the water-tight shell. Ease of assembly of the circuit that provides the communication capability is thereby attained.

The outer surface of the water-tight shell on which the circuit is mounted does not need to be an exposed surface but may be covered by an enclosure.

The power supply charging device may further comprise an enclosure attached to the water-tight shell, with the circuit being arranged within the enclosure (i.e., the circuit being sandwiched between the enclosure and the outer surface of the water-tight shell).

The water-tight shell and the enclosure may form, in combination, a power plug housing for a power plug that is operative for engagement with a mains outlet.

The enclosure may be an end cap attached to the water-tight shell. This facilitates ease of assembly of the power plug by assembling the circuit on the outer surface of the water-tight shell and, subsequently, enclosing the circuit by the enclosure.

The circuit may have a configuration mode in which the wireless interface circuit may be configurable for a subsequent transmission of the appliance-related data. The configuration mode allows the power supply charging device to receive the information required for transmitting the appliance-related data.

The configuration mode may be operative such that it does not allow communication between the power supply charging device and the appliance(s) to be configured from which appliance-related data is obtained. The communication between the power supply charging device and the appliance(s) may be implemented in a manner which is coded in the power supply charging device and the appliance(s), respectively. The communication between the power supply charging device and at least one of the appliance(s) for obtaining the appliance-related data may be implemented using a proprietary communication technique, such as communication over conductors of the power supply cable.

The power supply charging device may comprise a user interface.

The circuit may be operative to enter the configuration mode responsive to a user input action at the user interface. This facilitates initiation of the configuration mode.

In the configuration mode the circuit may be operative to receive configuration information required for the subsequent transmission of the appliance-related data to a remote computing device via an access point.

The user interface may allow information related to the operation of the power supply charging device, such as its communication status or configuration status, to be output. The user interface may allow the power supply charging device to be configured for communication with, e.g., an access point. This may be done via communication with a user terminal, which needs to be established selectively only for configuring the access point but not for subsequent transmission of appliance-related data.

The user interface may comprise at least one actuation element for operative to cause the communication circuit to enter a configuration mode. The actuation element may comprise a physical actuation element. The actuation element may comprise a button, which may be a soft button or hard button.

The user interface may comprise at least one status indicator operative to output status information related to the communication circuit, optionally wherein the at least one status indicator may comprise several light segments. The status indicator(s) may comprise one or several light-emitting elements. The status indicator(s) may comprise one or several LEDs. The status indicator(s) may comprise one or several LED-based light segments that may be arranged partially or entirely around a circumference of an end face of the power plug. This allows several status indicators to be integrated on a small area.

The power supply charging device may comprise a memory. This facilitates temporarily storing the appliance-related data prior to transmission.

The memory may comprise a persistent memory. The persistent memory may have stored therein access information allowing the communication circuit to communicate via an access point and/or to transmit the appliance-related data to a server or computer.

The persistent memory may have stored therein security-related data, with the communication circuit being operative to use the security-related data for data obfuscation, encryption, and/or authentication when transmitting the appliance-related data.

The circuit may be operative to receive the configuration information over the wireless interface circuit or over a second wireless interface circuit different from the wireless interface circuit. This allows the circuit of the power supply charging device to be configured using, e.g., a user terminal.

A kit according to an embodiment comprises one or appliances and the power supply charging device, the power supply charging device being operative to transmit appliance-related data for the one or several of the appliances.

The power supply charging device is operative to act as a communication hub for collecting and transmitting appliance related-data from one or several personal care appliances or other appliances. It is not required (but still possible) for the appliances to be equipped with an interface that allows them to transmit their data to an access point coupled to a wide area network.

The power supply charging device may also be operative to act as a communication hub for relaying (possibly after processing)
The one or several appliances may be selected from a group consisting of a hair cutting, trimming or removal appliances and oral care appliances (such as electric toothbrushes or oral shower devices).

The kit may further comprise an access point of a wireless local area network (WLAN). The circuit may be operative to transmit the appliance-related data to a remote computing device via the WLAN access point. This allows the power supply charging device to operate as a hub that collects, optionally processes and/or aggregates, and then transmits the appliance-related data via the access point.

The kit may further comprise a user terminal. The circuit may be operative to receive from the user terminal configuration information for the wireless interface circuit that is required for a subsequent transmission of the appliance-related data to a remote computing device via an access point of a wireless local area network (WLAN).

The circuit may be operative to provide the appliance-related data to the user terminal.

The kit may comprise a first appliance having a connector operative for engagement with the appliance power connector, the first appliance being operative for being powered by the power supply charging device.

The power supply charging device may be operative to obtain and/or transmit appliance-related data related to the first appliance while the power supply charging device is coupled to the first appliance.

The kit may comprise a second appliance having a female connector operative for engagement with the appliance power connector, the second appliance being operative for being powered by the power supply charging device.

The power supply charging device may be operative to obtain and/or transmit appliance-related data related to the second appliance while the power supply charging device is coupled to the first appliance (i.e., the collection and transmission of the appliance-related data is not limited to the appliance with which the power supply charging device is presently being engaged).

The kit may comprise a second appliance that is incapable of being mechanically engaged with the power supply charging device.

The power supply charging device may be operative to obtain and/or transmit appliance-related data related to the second appliance while the power supply charging device is coupled to the first appliance (i.e., the collection and transmission of the appliance-related data is not limited to appliances for which the power supply charging device can be used for supplying power thereto).

The second appliance may be an appliance that does not have an electromechanical actuator. I.e., the collection and transmission of the appliance-related data is not limited to appliances having electro-mechanical actuators. The second appliance may be a wet shaver that does not have an electromechanical actuator, for example.

A method of obtaining and transmitting appliance-related data according to an embodiment is performed by a power supply charging device comprising connector pins operative for engagement with a mains outlet, a power supply cable comprising an appliance power connector, and a circuit comprising a wireless interface circuit. The method may comprise obtaining, by the circuit, appliance-related data for at least one appliance (such as a personal care appliance), and transmitting, by the circuit, the appliance-related data over the wireless interface circuit. Alternatively or additionally, the circuit may transmit data that has been received via the wireless interface circuit to the personal care appliance, using wired or wireless communication.

In the method, integration of the circuit (that is operative to obtain and transmit appliance-related data) into the power supply charging device allows the appliance-related data to be transmitted to, e.g., a wide area network (WAN) without requiring (while still allowing) an interface for communication with the WAN to be present in the appliance itself and without requiring the user to communicatively couple a terminal device (such as a cellular telephone, wearable, tablet, or portable or stationary computer) to the appliance for transmission of the appliance-related data.

The method may further comprise supplying, by the power supply charging device, power to at least one personal care appliance engaged with the appliance power connector.

The method may comprise receiving, by the circuit, configuration information required for a subsequent transmission of the appliance-related data to a remote computing device via an access point.

The method may comprise storing, by the circuit, the configuration information.

The method may comprise accessing and using, by the circuit, the configuration information for transmitting the appliance-related data to the remote computing device via the access point.

The receipt, storage, and use of the configuration information allows the circuit to be configured for transmitting the appliance-related data. This configuring may be performed using, e.g., a user terminal.

Obtaining the appliance-related data may comprise obtaining at least some of the appliance-related data for a personal care appliance while the personal care appliance is being engaged with the appliance power connector.

Obtaining the appliance-related data may comprise obtaining at least some of the appliance-related data for one or several second personal care appliances while the appliance power connector is engaged with a first personal care appliance different from the one or several second personal care appliances.

The second appliance may be incapable of being mechanically engaged with the power supply charging device.

The second appliance may be an appliance that does not have an electromechanical actuator. I.e., the collection and transmission of the appliance-related data is not limited to appliances having electro-mechanical actuators. The second appliance may be a wet shaver that does not have an electromechanical actuator, for example.

The personal care appliance may be selected from a group consisting of a hair cutting, trimming or removal appliance and an oral care appliance (e.g., a dental care appliance).

The method may be performed using a power supply charging device according to an embodiment.

The power supply charging device may have a water-tight shell that may be sealed against water ingress. The water-tight shell may have a waterproof rating of, e.g., IPX4, IPX5 or greater. The circuit may be arranged downstream, along a power transmission path from connector pins for the mains outlet to the appliance, of a converter housed in the water-tight shell. The circuit may be arranged in a further compartment of the power supply charging device which may have a waterproof rating that is less than that of the water-tight shell, because voltage down-conversion has already happened upstream of the communication circuit.

The power supply charging device may be operative to pass electric energy output by the converter through the communication circuit to the power supply cable. This configuration facilitates manufacture of the power supply charging device. The communication circuit may be added to an autonomous power plug component that provides voltage down-conversion, is sealed against water ingress and, in the power supply charging device, acts as a first compartment that is integrated, jointly with the communication circuit, into the power supply charging device.

The circuit may comprise at least one further communication interface circuit different from the wireless interface circuit to collect the appliance-related data. The at least one further communication interface circuit enables the power supply charging device to collect appliance-related data for transmission over the wireless interface circuit, without requiring the appliance itself to have the respective wireless interface circuit.

The at least one further communication interface circuit may comprise a wired communication circuit. The wired communication circuit may be operative to collect the appliance-related data over first and second conductors of the power supply cable over which power is supplied. Alternatively or additionally, the at least one further communication interface circuit may comprise a further wireless interface circuit different from the wireless interface circuit. The at least one further communication interface circuit enables the power supply charging device to collect, via the interface, the appliance-related data for transmission, without requiring (while still allowing) the appliance itself to be operative for data transmission over the wireless interface circuit via which the power supply charging device transmits the appliance-related data.

The at least one further communication interface circuit may comprise both the wired communication circuit and the further wireless interface circuit different from the wireless interface circuit. Thus, the power supply charging device may comprise at least three different communication interface circuits, providing versatility in collecting appliance-related data.

The method may comprise transmitting, by the circuit, data received at the wireless interface circuit to the personal care appliance. This allows data for configuring the personal care appliance, firmware or software updates for the personal care appliance, or other data to be provided to the personal care appliance via the power supply charging device, without requiring the personal care appliance itself to have an interface that allows the appliance to access the repository at which the configuration data, firmware or software updates are stored.

The method may comprise performing, by the circuit, one- or bi-directional communication with the personal care appliance.

The one- or bi-directional communication with the personal care appliance may be performed via the at least one further communication interface. The bi-directional communication capability may be used to provide, by the power supply charging device, data for configuring the personal care appliance, update data for the personal care appliance, or other data to the personal care appliance.

In the devices, kits, and methods according to embodiments, the appliance may be operative to communicate with the circuit of the power supply charging device using a second communication standard (such as wired communication over conductors of the power supply cable, Bluetooth, or BLE) that is different from a communication standard (such as IEEE 802.11 a, b, g, n, ac, ax, and/or ad) supported by the wireless interface circuit of the circuit of the power supply charging device. This allows a less expensive communication chipset to be employed for communication between the appliance and the power supply charging device, obviating the need to provide a chipset for communication with, e.g., an access point in the appliance.

The appliance may be configured in such a way that it is incapable of communicating in accordance with the communication standard (such as IEEE 802.11 a, b, g, n, ac, ax, and/or ad) supported by the wireless interface circuit of the circuit of the power supply charging device. This allows a less expensive communication chipset to be employed for communication between the appliance and the power supply charging device, obviating the need to provide a chipset for communication with, e.g., an access point in the appliance.

The appliance may comprise an appliance connector operative to mechanically engage the appliance power connector of the power supply charging device. This allows the power supply charging device to transmit appliance-related data for the appliance that can be supplied with power by the power supply charging device.

The appliance may be configured such that it is incapable of mechanically engaging the connector of the power supply charging device. This allows the power supply charging device to transmit appliance-related data for an appliance that may have a different, dedicated power supply and/or that may not require any wired power supply at all.

A system according to an embodiment comprises an appliance and the power supply charging device. The power supply charging device is operative to transmit appliance-related data via the wireless interface circuit.

The power supply charging device may be operative to supply the appliance with electric power.

The appliance may be a personal care appliance.

The personal care appliance may be selected from a group consisting of a hair cutting, trimming or removal appliance and an oral care appliance (e.g., a dental care appliance).

The appliance may be operative to communicate with the circuit of the power supply charging device using a second communication standard (such as wired communication over conductors of the power supply cable, Bluetooth, or BLE) that is different from a communication standard (such as IEEE 802.11 a, b, g, n, ac, ax, and/or ad) supported by the wireless interface circuit of the circuit of the power supply charging device. This allows a less expensive communication chipset to be employed for communication between the appliance and the power supply charging device, obviating the need to provide a chipset for communication with, e.g., an access point in the appliance.

The appliance may be configured in such a way that it is incapable of communicating in accordance with the communication standard (such as IEEE 802.11 a, b, g, n, ac, ax, and/or ad) supported by the wireless interface circuit of the circuit of the power supply charging device. This allows a less expensive communication chipset to be employed for communication between the appliance and the power supply charging device, obviating the need to provide a chipset for communication with, e.g., an access point in the appliance.

The appliance may comprise an appliance connector operative to mechanically engage the appliance power connector of the power supply charging device. This allows the power supply charging device to transmit appliance-related data for the appliance that can be supplied with power by the power supply charging device.

The appliance may be configured such that it is incapable of mechanically engaging the appliance power connector of the power supply charging device. This allows the power supply charging device to transmit appliance-related data for an appliance that may have a different, dedicated power supply and/or that may not require any wired power supply at all.

The power supply charging device may be operative to transmit data received at the wireless interface circuit to the appliance. This allows data for configuring the appliance, firmware or software updates for the appliance, or other data to be provided to the appliance via the power supply charging device, without requiring the appliance itself to have an interface that allows the appliance to access the repository at which the configuration data, firmware or software updates are stored.

The power supply charging device may be operative for one- or bi-directional communication with the appliance.

The one- or bi-directional communication with the appliance may be established via the at least one further communication interface. The bi-directional communication capability may be used to provide, by the power supply charging device, data for configuring the personal care appliance, update data for the personal care appliance, or other data to the personal care appliance.

The system may comprise both a first appliance and a second appliance, with the power supply charging device being operative to obtain appliance-related data for both the first appliance and the second appliance for transmission via the wireless interface circuit.

The system may comprise an access point. The system may comprise a router including the access point. The access point may be a WLAN (e.g., WiFi) access point. The access point may be operative for communication in accordance with at least one of IEEE 802.11 a, b, g, n, ac, ax, ad.

The system may comprise a computer or sever. The power supply charging device may be operative to transmit the appliance-related data to the computer or sever via a WAN to which the access point is coupled.

The system may comprise a user terminal. The user terminal may be a handheld user terminal. The user terminal may be operative to receive, from the computer or server, the appliance-related data or data derived therefrom. This allows the user to conveniently review appliance-related data or data derived therefrom (such as an evaluation of the user's personal care appliance usage and/or information on required or recommended maintenance operations to be performed on the user's personal care appliance(s)) via the user terminal.

The power supply charging device may be operative to provide the appliance-related data directly to the user terminal.

The power supply charging device may be operative to establish a communication link directly to the user terminal for a configuration of the wireless interface circuit.

The power supply charging device may be operative to receive, from the user terminal, information on a name and/or key of an access point to which the appliance-related data is to be transmitted. This facilitates a configuration of the power supply charging device using the user terminal, without requiring the user terminal to be located close to the appliance(s) for transmission of the appliance-related data.

The power supply charging device may be operative to receive, from the user terminal, information on an identifier and/or passcode for the user that is required to access a user-specific storage area in the server or computer.

The power supply charging device may be operative to transmit the appliance-related data to the access point without transmitting the appliance-related data to the user terminal.

A use of a power supply charging device according to an embodiment comprises using the power supply charging device to provide a communication link over which appliance-related data is transmitted.

The use may comprise transmitting appliance-related data over a wireless interface circuit operative in accordance with at least one of IEEE 802.11 a, b, g, n, ac, ax, ad.

The use may comprise interfacing, by the power supply charging device, an appliance that does not have a wireless interface circuit capable of communicating with an access point (e.g., that does not have an interface in accordance with at least one of IEEE 802.11 a, b, g, n, ac, ax, ad) with the access point.

Additional optional features of the use according to embodiments correspond to optional features of the power supply charging device, kit, or system according to embodiments.

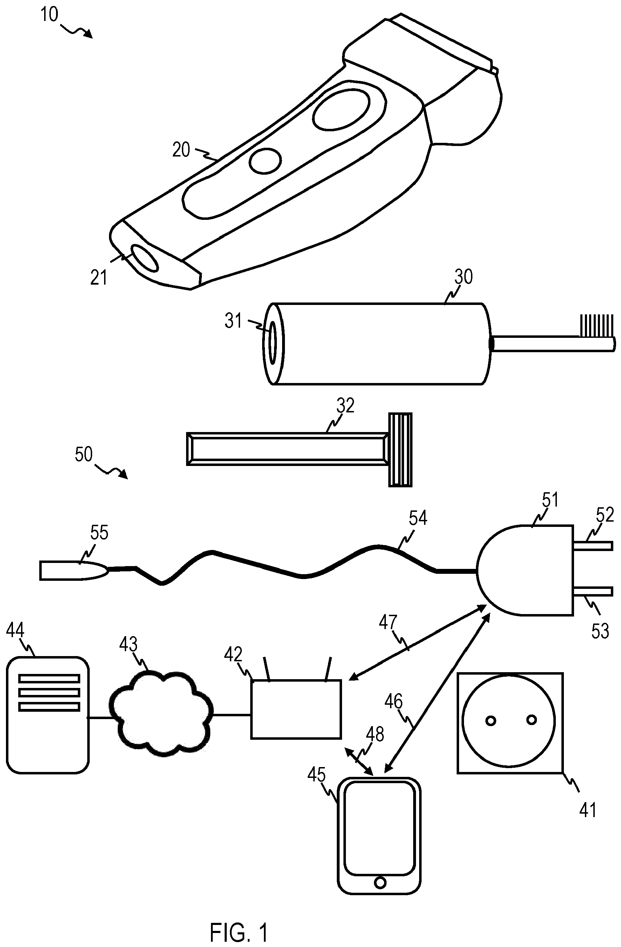

Figure 1 is a schematic view of a system 10. The system 10 comprises a power supply charging device 50. The power supply charging device 50 is operative to transmit, via a wireless interface circuit of the power supply charging device 50, appliance-related data.

The system 10 comprises one or several appliances 20, 30, 32. The appliance(s) 20, 30, 32 may be home appliances, in particular personal care appliances. The appliance(s) may be or may comprise hair cutting, trimming and/or removal devices and/or oral care devices. The appliance(s) may be selected from a group consisting of an electric shaver, a wet shaver, a body groomer, a hair trimmer, an epilation device, an electric toothbrush, a tongue cleaner, a mouth shower device. The appliance(s) 20, 30, 32 may respectively comprise circuitry that can be communicatively accessed by the power supply charging device 50, for reading appliance-related data from the appliance(s) 20, 30, 32 by the power supply charging device 50.

One, several, or all of the appliance(s) 20, 30, 32 may comprise an appliance connector 21, 31 for receiving electric power. At least one of the appliances 20, 30, 32 may be operative to mechanically engage with and receive electric power from the power supply charging device 50. The appliance(s) may include an appliance 32 that is not operative to receive electric power via an appliance power connector 55 of the power supply charging device 50.

The power supply charging device 50 may be operative to collect appliance-related data from a first appliance with which it is connected to supply electric power thereto and/or a second appliance with which it is not connected. The power supply charging device 50 comprises a circuit operative to transmit the appliance-related data. The power supply charging device 50 may be operative to transmit the appliance-related data via an interface that accommodates transmission of the appliance-related data to a server 44 or computer 44 connected to a wide area network (WAN) 43, such as the internet. The server 44 or computer 44 may be provided in a cloud. The power supply charging device 50 may be operative to transmit the appliance-related data over, e.g., a WLAN interface (e.g., in accordance or compatible with IEEE 802.11, such as IEEE 802.11-2012 or IE 802.11-2016).

The appliance-related data may but does not need to be related to the appliance to which power is being supplied by the power supply charging device 50. The power supply charging device may be operative to collect and transmit appliance-related data for appliances (such as personal care appliances) that are incapable of being electrically connected to the power supply charging device 50 for receiving power therefrom, that are presently not electrically connected to the power supply charging device 50 for receiving power therefrom, and/or that do not need any wired connection to a power supply charging device 50 for receiving power.

The power supply charging device 50 may also be operative to obtain and transmit appliance-related data that relates to a second appliance 30, 32 different from an appliance 20 with which the power supply charging device 50 is engaged.

The appliance-related data may include data retrieved by the power supply charging device 50 from the appliance 20, 30, 32 over a wired or wireless communication channel and/or data collected by the power supply charging device 50 while it is being connected to the appliance.

Operation and construction of the power supply charging device 50 will be described in more detail below.

The power supply charging device 50 comprises a power supply cable 54 having a connector 55 for reversibly releasable engagement with an appliance 20, 30, 32. The power supply charging device 50 comprises a power plug 51 configured for engagement with a mains outlet 41. The power supply charging device 50 comprises a circuit that is operative to obtain and transmit appliance-related data that relate to one or several of the appliances 20, 30, 32, 32. The power plug 51 has connector pins 52, 53 for electrical coupling to a mains outlet by coupling with the mains outlet 41.

The circuit that obtains and transmit appliance-related data may be provided in the power plug 51 or at any other suitable location, preferably downstream of a converter of the power supply charging device 50. For illustration, the circuit that obtains and transmit appliance-related data may be integrated into the appliance power connector 55 of the power supply charging device. Alternatively or additionally, the power supply charging device 50 may comprise a frame for supporting an appliance thereon and providing electric power to an appliance, and the circuit that obtains and transmit appliance-related data may be integrated into the frame.

When the circuit that obtains and transmit appliance-related data is provided in the power plug 51, the power plug 51 may have a configuration with at least two distinct compartments, as will be described in more detail below.

The power plug 51 has connector pins 52, 53 for electrical coupling to a mains outlet by coupling with the mains outlet 41.

The power supply charging device 50 may operate as follows.

### Configuration of the power supply charging device 50

This is an operational phase that does not need to be performed upon every use. The configuration may be performed only once and/or when access information for an access point 42 changes and/or when access information for user-specific protected storage space in the server or computer 44 changes. The configuration is optional and could be omitted, e.g., when relevant communication data is already provisioned in the power supply charging device 50 when it is being provided to the user.

In a configuration mode, the circuit of the power supply charging device 50 may receive information required for transmitting appliance-related data to the server or computer 44 via the access point 42. Alternatively or additionally, the circuit of the power supply charging device may receive information required for accessing a user-specific protected storage space in the server or computer 44. This information may be persistently stored in the power supply charging device 50 and may be accessed when the power supply charging device 50 transmits appliance-related data.

The power supply charging device 50 may enter the configuration mode in response to a physical input action performed on an actuation element of the power supply charging device 50.

The configuration information (which may include a name or other identifier of the access point 42, a key for communication with the access point 42, a user identifier and/or passcode information for accessing a protected user-specific storage connected to a WAN 43) may be received by the power supply charging device 50 from a user terminal 45. The user terminal 45 may offer an interface that allows a user to enter alphanumeric information for configuring the power supply charging device 50 for its intended communication towards the access point 42 and, optionally, the server or computer 44. The power supply charging device 50 may receive the configuration information from the user terminal 45 and may persistently store the configuration information for later use in transmitting the appliance-related data.

### Obtaining appliance-related data

During field use of the power supply charging device 50, the power supply charging device 50 may obtain appliance-related data. This may comprise receiving information, via a wired or wireless communication link, from the respective appliance 20, 30, 32. Alternatively or additionally, (part of) the appliance-related data may be generated by the power-supply device 50. For illustration, during one or several charging cycles, the power supply charging device 50 may determine characteristics (such as charging current and voltage) when charging a rechargeable battery in one or several of the appliances 20, 30, 32, which may be useful for establishing information on a battery state (such as battery health).

The appliance-related data obtained by the circuit of the power supply charging device 50 may be aggregated, transformed (e.g., filtered and/or Fourier-transformed), or processed otherwise prior to transmission. In particular, the appliance-related data that is transmitted by the power supply charging device 50 need not contain the identical information as the appliance-related data that is obtained by the power supply charging device 50.

The appliance-related data may comprise appliance operation data. The appliance operation data may comprise information on a time, an aggregated time, and/or frequency of use. The appliance operation data may comprise information on parameters (such as voltages, currents, battery capacity, battery charging cycle information, and/or temperature) measured by the appliance 20, 30, 32. Such information is useful for providing assistance to a user, e.g., by providing information on component wear, suggestions for appliance usage, or other useful user instructions. Such information may also be useful for maintenance.

Alternatively or additionally, the appliance-related data may comprise appliance status data. The appliance status data may comprise information on a status of at least one component of the appliance 20, 30, 32. The appliance status data may include or may be derived from parameters measured by the appliance 20, 30, 32, such as status of a component (such as a foil or cutting blade of a hair cutting device) that is subject to wear in use of the appliance, or other status information indicating a status of the appliance 20, 30, 32 or a component thereof. Such information is useful for providing assistance to a user, e.g., by providing information on component wear, suggestions for appliance usage, or other useful user instructions. Such information may also be useful for maintenance purposes.

When the power supply charging device 50 obtains the appliance-related data, it may use a communication interface that is different from the wireless interface circuit over which the power supply charging device 50 transmits the appliance-related data. For illustration, the power supply charging device 50 may have a circuit comprising a first communication chipset (e.g., a WiFi communication chip) or other circuit operative to transmit the appliance-related data and a second communication chipset or other circuit (e.g., a Bluetooth, Bluetooth Low Energy (BLE), or wired communication chip) operative to receive data from at least one of the appliance(s) 20, 30, 32.

The appliance-related data may be temporarily stored in the power supply charging device 50.

### Transmitting appliance-related data

During field use of the power supply charging device 50, the power supply charging device 50 may transmit the appliance-related data. The power supply charging device 50 may initiate a transmission of the appliance-related data responsive to a trigger event (such as at least one of: receipt of new appliance-related data, expiry of a timer, connection of the power supply charging device 50 to a mains outlet 41 and, optionally, an appliance). The power supply charging device 50 may initiate a transmission of the appliance-related data in time intervals that may be user-configurable, optionally conditionally when the power supply charging device 50 is engaged with a mains outlet 41 and an appliance.

The transmission of the appliance-related data by the power supply charging device 50 may be performed when the
Transmitting the appliance-related data may comprise selectively establishing, via the circuit, a communication connection for transmission the appliance-related data. Configuration information that allows the power supply charging device to establish a communication link 47 may be retrieved from memory integrated in the power supply charging device. Transmitting the appliance-related data may comprise selectively transmitting, via the circuit, the appliance-related data to the computer or server 44 for storage. Access information that allows a user-specific storage space to be accessed may be retrieved from memory integrated in the power supply charging device.

The circuit of the power supply charging device may include a wireless interface circuit that allows the appliance-related data to be transmitted via an access point 42 (which may be a WLAN access point, in particular a WiFi access point) and a WAN 43 to a computer or server 44 located remotely from the power supply charging device 50.

### Providing data to the appliance

During field use of the power supply charging device 50, the power supply charging device 50 may optionally be operative to provide data received via the access point 42 or directly from the user terminal 45 to one or several appliances. The power supply charging device 50 may be operative to provide data for configuring the appliance, firmware or software updates for the personal care appliance, or other data to the appliance(s), without requiring the appliance(s) to have an interface that allows the appliance(s) to access the repository at which the data for configuring the appliance, firmware or software updates for the personal care appliance or other data that are to be transmitted to the appliance are stored or received.

In one example, a computer or server 44 may provide a software or firmware update to an appliance (such as a personal care appliance), with the power supply charging device 50 passing the data on to the appliance.

In another example, a user terminal 45 may provide data for configuring an appliance (such as a personal care appliance), with the power supply charging device 50 passing the data on to the appliance.

### Accessing appliance-related data

Appliance-related data and/or additional information generated therefrom may be accessed by the user using a user terminal 45 (that may but does not need to be the same as the user terminal used when the power supply charging device 50 is configured for transmitting data via, e.g., the access point 42). The user terminal 45 may access the appliance-related data to, e.g.,
- review his/her usage of the appliance(s) 20, 30, 32 (such as the time spent for shaving and/or brushing his/her teeth) based on the appliance-related data,
- receive suggestions related to his/her usage of the appliance(s) 20, 30, 32 (such as suggestions for modifying the operation mode of an appliance) based on the appliance-related data,
- receive advice on recommended maintenance operations (such as replacement of a replaceable component; a cutting blade or shaver foil or toothbrush implement are examples) based on the appliance-related data, and/or
- receive advice on maintenance operations that should be performed by qualified personnel (such as replacement of a battery) based on the appliance-related data.

The user terminal 45 may access the appliance-related data via a server or computer 44 or using a direct communication link with the wireless interface circuit of the power supply charging device 50. The power supply charging device 50 may be operative to provide the appliance-related data to the user terminal 45 (e.g., via a direct wireless communication link between the power supply charging device 50 and the user terminal 45).

Accessing the appliance-related data via a user terminal is not required. For illustration, the appliance-related data may be accessed selectively by service personnel when performing maintenance operations on the appliances.

The methods disclosed herein may respectively comprise using the transmitted appliance-related data for maintenance and service purposes of the appliance(s).

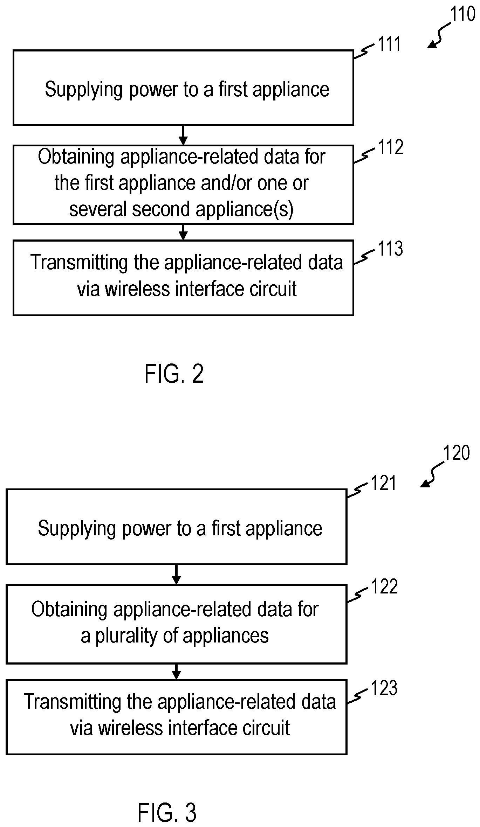

Figure 2 is a flow chart of a method 110 according to an embodiment. The method may be performed automatically by the power supply charging device 50.

At step 111, the power supply charging device 50 supplies power to a first appliance, such as a first appliance 20 having a connector 21 operative to engage with the appliance power connector 55.

At step 112, the power supply charging device 50 may obtain appliance-related data for the first appliance that is being supplied with power.

Alternatively or additionally, at step 112, the power supply charging device 50 may obtain appliance-related data for one or several second appliances with which the power supply charging device 50 is presently not engaged. This allows the power supply charging device 50 to collect data for appliances 30, 32 located in proximity to the appliance 20 with which the power supply charging device 50 is engaged. For illustration, while supplying power to an electric razor 20, the power supply charging device 50 may collect data for the electric razor 50 but may also collect data, via a wireless communication link, from other appliances such as a body groomer, a hair removal device, an electric toothbrush, a dental shower, and/or a wet shaver.

The appliance-related data obtained at step 122 may comprise appliance operation data. The appliance operation data may comprise information on a time, an aggregated time, and/or frequency of use of the respective first and/or second appliance(s). The appliance operation data may comprise information on parameters (such as voltages, currents, battery capacity, battery charging cycle information, and/or temperature) measured by the respective first and/or second appliance(s), optionally buffered in the respective first and/or second appliance(s), and read by the power supply charging device at step 122.

The appliance-related data obtained at step 122 may comprise appliance status data. The appliance status data may comprise information on a status of at least one component of the respective first and/or second appliance(s). The appliance status data may include or may be derived from parameters measured by the appliance, such as battery health status, status of a component (such as a foil or cutting blade of a hair cutting device) that is subject to wear in use of the respective first and/or second appliance(s), or other status information indicating a status of the appliance or a component thereof. Part or all of the data may be measured by the respective first and/or second appliance(s), optionally buffered in the respective first and/or second appliance(s), and read by the power supply charging device at step 122. Part or all of the data may be obtained by the power supply charging device (e.g., by deriving battery health information from charging currents and/or voltages during a charging or battery calibration cycle).

At step 113, the appliance related data may be transmitted by the power supply charging device 50. The transmission may be a transmission to a remote computer or server via a WLAN. The power supply charging device 50 may operate as a communication hub that communicates the appliance-related data via an access point of the WLAN to a remote computer or server.

The appliance-related data transmitted at step 113 may comprise appliance operation data. The appliance operation data may comprise information on a time, an aggregated time, and/or frequency of use. The appliance operation data may comprise information on parameters (such as voltages, currents, battery capacity, battery charging cycle information, and/or temperature) measured by the appliance. Such information is useful for providing assistance to a user, e.g., by providing information on component wear, suggestions for appliance usage, or other useful user instructions. Such information may also be useful for maintenance purposes.

The appliance-related data transmitted at step 113 may comprise appliance status data. The appliance status data may comprise information on a status of at least one component of the appliance. The appliance status data may include or may be derived from parameters measured by the appliance, such as battery health status, status of a component (such as a foil or cutting blade of a hair cutting device) that is subject to wear in use of the appliance, or other status information indicating a status of the appliance or a component thereof. Such information is useful for providing assistance to a user, e.g., by providing information on component wear, suggestions for appliance usage, or other useful user instructions. Such information may also be useful for maintenance purposes. The appliance-related data may comprise first appliance-related data related to one or several appliances having an appliance connector operative to matingly engage with the connector of the power supply charging device. The appliance-related data may comprise second appliance-related data related to one or several other appliances that do not have an appliance connector operative to matingly engage with the connector of the power supply charging device. The power supply charging device may, thus, operate as a data aggregation and transmission hub for collecting and transmitting appliance-related data for various appliances (such as various personal care or other home appliances) without requiring the user's cellphone or computer to be involved in the data collection and transmission. The user's cellphone or computer may be used selectively only for configuring the power supply charging device for the respective home network and/or user.

Step 113 may be repeated. Repetitions of step 113 may be triggered by a trigger event. The trigger event may be or may include engagement of the power supply charging device with a mains outlet and/or appliance, expiry of a timer, or other criteria that may be stored persistently in the power supply charging device or that may be configurable.

As noted above, various data processing techniques may be applied to the appliance-related data prior to their transmission. These techniques may be selected from aggregation, filtering, transformation, etc.

Figure 3 is a flow chart of a method 120. The method may be performed automatically by the power supply charging device 50.

At step 121, the power supply charging device 50 supplies power to a first appliance, such as a first appliance 20 having a connector 21 operative to engage with the appliance power connector 55.

At step 122, the power supply charging device 50 obtains appliance-related data for several appliances. The several appliances may include several of:
- the first appliance 20 that is being supplied with power;
- one or several second appliances 30, 32 that are not being supplied with power.

For illustration, while supplying power to an electric razor 20, the power supply charging device 50 may collect data for the electric razor 50 but may also collect data, via a wireless communication link, from other appliances such as a body groomer, a hair removal device, an electric toothbrush, a dental shower, and/or a wet shaver.

The appliance-related data obtained at step 122 may comprise appliance operation data. The appliance operation data may comprise information on a time, an aggregated time, and/or frequency of use of the respective first and/or second appliance(s). The appliance operation data may comprise information on parameters (such as voltages, currents, battery capacity, battery charging cycle information, and/or temperature) measured by the respective first and/or second appliance(s), optionally buffered in the respective first and/or second appliance(s), and read by the power supply charging device at step 122.

The appliance-related data obtained at step 122 may comprise appliance status data. The appliance status data may comprise information on a status of at least one component of the respective first and/or second appliance(s). The appliance status data may include or may be derived from parameters measured by the appliance, such as battery health status, status of a component (such as a foil or cutting blade of a hair cutting device) that is subject to wear in use of the respective first and/or second appliance(s), or other status information indicating a status of the appliance or a component thereof. Part or all of the data may be measured by the respective first and/or second appliance(s), optionally buffered in the respective first and/or second appliance(s), and read by the power supply charging device at step 122. Part or all of the data may be obtained by the power supply charging device (e.g., by deriving battery health information from charging currents and/or voltages during a charging or battery calibration cycle).

At step 123, the appliance related data for the several appliances may be transmitted by the power supply charging device 50. The transmission may be a transmission to a remote computer or server via a WLAN. The power supply charging device 50 may operate as a communication hub that communicates the appliance-related data via an access point of the WLAN to a remote computer or server.

Various data processing techniques may optionally be applied to the appliance-related data prior to their transmission.

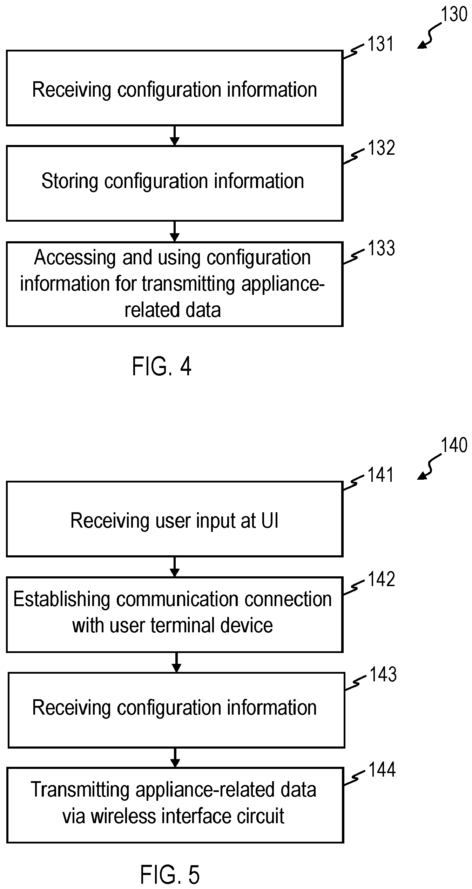

Figure 4 is a flow chart of a method 130. The method may be performed automatically by the power supply charging device 50.

At step 131, the power supply charging device 50 may receive configuration information. The configuration information may be received by the power supply charging device 50 over the wireless interface circuit over which appliance-related data are subsequently transmitted or over another wireless interface (such as a Bluetooth or Bluetooth Low Energy (BLE) interface). The configuration information may be received from a user terminal. The configuration information may include information that allows the power supply charging device 50 to transmit appliance-related data over a WLAN to a remote computer or server 44 that is connected to a WAN 43, such as the internet. The configuration information may include an identifier (e.g., a name) of an access point, such as a WLAN access point. The configuration information may include a key, password, or other safety code that is required for connecting, via the access point, to a WAN. For illustration, the configuration information may include a WPA key (which may be a WPA2 or WPA3 key) or other password for connecting to the access point.

Alternatively or additionally, the configuration information may include an identifier assigned to the user at the server or computer 44 (such as an account name) and/or a password required by the user for authentication at the server or computer 44.

In one implementation, both information for connecting to the WAN 43 via the access point 42 and information for accessing a secured storage area located at or managed by the server or computer 44 may be received in the configuration information.

At step 132, the configuration information may be stored in the power supply charging device 50. The configuration information may be stored in a non-volatile memory of the power supply charging device 50. The stored configuration information may include information that allows the power supply charging device 50 to transmit appliance-related data over a WLAN to a remote computer or server 44 that is connected to a WAN 43, such as the internet. The configuration information may include an identifier (e.g., a name) of an access point, such as a WLAN access point. The configuration information may include a key, password, or other safety code that is required for connecting, via the access point, to a WAN, as previously explained. Alternatively or additionally, the configuration information may include an identifier assigned to the user at the server or computer 44 (such as an account name) and/or a password required by the user for authentication at the server or computer 44.

At step 133, after termination of a configuration mode and during live use of the power supply charging device, the configuration information may be accessed and used for transmitting appliance-related data.

At step 133, an identifier (e.g., a name) of the access point 42 and a key (e.g., a WPA key) may be used to transmit the appliance-related data. The appliance-related data may be obtained from an appliance with which the power supply charging device is engaged to provide power thereto and/or from one or several appliances with which the power supply charging device is not engaged when obtaining and/or transmitting the appliance-related data.

Processing of appliance related data may be performed prior to transmitting the appliance-related data. The processing may include any one or any combination of: aggregating data obtained from an appliance over a time period; aggregating data obtained from several devices; filtering; performing transforms (such as Fourier transforms); performing threshold comparisons; processing the obtained appliance-related data with a processing logic to determine information on a status of the appliance or a component thereof (such as information on a blade of a hair removing or cutting appliance, or information on a battery of a personal care appliance).

The transmission step 133 may be performed continually while the power supply charging device provides power to an appliance.

The transmission step 133 may be performed selectively in response to a trigger event. The trigger event may be dependent on the appliance-related data obtained from one or several appliances. For illustration, the power supply charging device may
- obtain appliance-related data indicative of a state or aggregated time of use of at least one component of the appliance,
- process the appliance-related data to determine whether information or a warning is to be output to the user (such as information that a maintenance action is recommended or information that a maintenance action is required), and
- selectively access and use the configuration information for transmission of the appliance-related data when it is determined that information or a warning is to be output to the user.

The trigger event may be used-configurable. For illustration, the user may specify in the configuration information 131 under which conditions the appliance-related data is to be transmitted.

As a specific example, the power supply charging device may
- obtain information on a battery charging cycle for an appliance with which it is engaged or from an appliance with which it is not engaged,
- process the information on the battery charging cycle to determine a battery state of health indicator,
- determine, based on the battery state of health indicator, whether appliance-related data is to be transmitted that indicates that the battery may need maintenance or replacement, and
- access and use the configuration information for transmission of the appliance-related data when it is required to inform the user that the battery may need maintenance or replacement (which may be determined by comparing the battery state of health indicator to one or several state of health thresholds).

The trigger condition that defines at which point in time (i.e., at which state of health level) the user is informed may be adjustable in a user-specific manner in the configuration step in which the configuration information is input.

As a specific example, the power supply charging device may
- obtain information that includes a use time period over which a hair cutting, removal, or trimming appliance (with the time period being stored in the appliance and read out by the power supply charging device),
- process the use time period to determine a state of health or other status indicator of a blade and/or cutting foil,
- determine, based on the state of health or other status indicator, whether appliance-related data is to be transmitted that indicates that the blade and/or cutting foil should be replaced, and
- access and use the configuration information for transmission of the appliance-related data when it is required to inform the user that the blade and/or cutting foil should be replaced.

The trigger condition that defines at which point in time (i.e., at which state of degradation of the blade and/or cutting foil) the user is informed may be adjustable in a user-specific manner in the configuration step in which the configuration information is input.

As a further specific example, the power supply charging device may
- obtain information on a battery charging state from an appliance with which it is engaged or from an appliance with which it is not engaged,
- process the battery charging state by comparing it to one or several thresholds,
- determine, based on a result of the threshold comparisons, whether appliance-related data is to be transmitted that indicates that the battery charging state has reached certain thresholds (such as a first threshold at which the user is alerted that charging is recommended and a second threshold at which the user is alerted that charging is required), and
- access and use the configuration information for transmission of the appliance-related data when it is required to inform the user that the battery charging level has reached any of these thresholds.

The trigger condition that defines at which point in time (i.e., at which battery charging level) the user is informed may be adjustable in a user-specific manner in the configuration step in which the configuration information is input.

As a further specific example, the power supply charging device may
- obtain information on a battery charging cycle for an appliance with which it is engaged or from an appliance with which it is not engaged,
- process the information on the battery charging cycle to determine a battery state of health indicator,
- determine, based on the battery state of health indicator, whether appliance-related data is to be transmitted that indicates that the battery may need maintenance or replacement, and
- access and use the configuration information for transmission of the appliance-related data when it is required to inform the user that the battery may need maintenance or replacement (which may be determined by comparing the battery state of health indicator to one or several state of health thresholds).

The trigger condition that defines at which point in time (i.e., at which state of health level) the user is informed may be adjustable in a user-specific manner in the configuration step in which the configuration information is input.

Figure 5 is a flow chart of a method 140. The method 140 may be performed by the power supply charging device 50.

At step 141, a user input is received at a user interface (UI) of the power supply charging device 50. The user input may be a user input for entering a configuration mode.

At step 142, in response to receipt of the user input, a communication connection may be established with a user terminal device 45. The communication connection may be established via a further wireless interface different from the wireless interface circuit over which the appliance-related data is subsequently transmitted. For illustration, the communication connection at step 142 may be a Bluetooth or BLE connection.

At step 143, configuration information may be received from the user terminal device 45. The user terminal device 45 may execute instruction code that allows a user to enter the configuration information for the power supply charging device at the user terminal device 45. The user terminal device 45 may transmit the configuration information to the power supply charging device 50.

At step 144, the power supply charging device transmits appliance-related data via a wireless interface circuit, using the configuration information received at step 143. Step 144 may be implemented in any of the ways described for step 133 above.

The transmission of appliance-related data at step 144 may be performed via a wireless interface circuit that is different from the further wireless interface over which the configuration information is received at step 143.

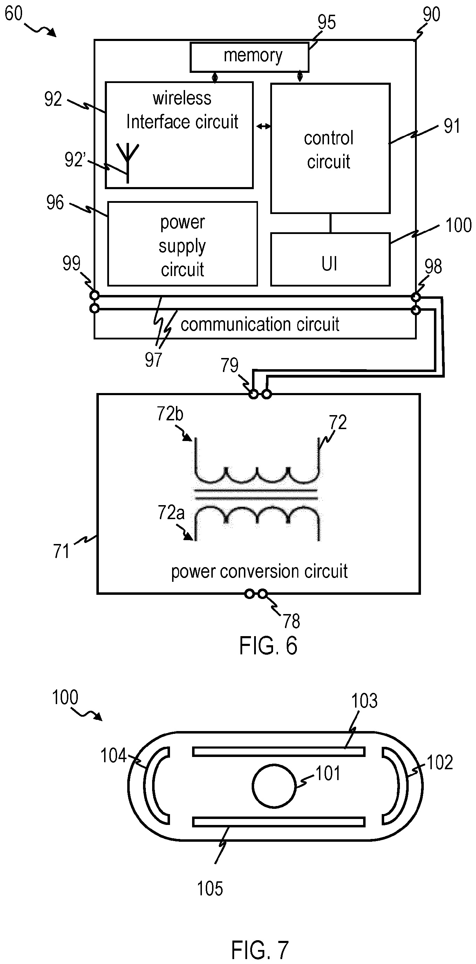

Figure 6 is a schematic partial view of the power supply charging device, showing a circuit 60 in more detail. The circuit 60 may be incorporated in the power plug 51, without being limited thereto. The power plug 51 comprise a first compartment 61 and a second compartment 62 separated by a wall 65.

The circuit 60 may comprise a converter 71. The converter 71 may comprise a transformer 72. The converter 71 may be operative to perform a voltage down conversion. The converter 71 may include a galvanic separation. The converter 71 may have a converter input 78 and a converter output 79 galvanically separated from the converter input 78. Primary and secondary sides 72a, 72b of the transformer may be galvanically separated from each other.

The converter 71 may be an AC/DC converter. The converter 71 may be a switched mode power supply (SMPS).

The converter 71 may be arranged in the power plug 51, without being limited thereto.

The converter 71 may surrounded and delimited by an enclosure of the power plug 51 (such as a compartment of the power plug). The enclosure may provide waterproof characteristics according to at least IPX4 or greater (determined in accordance with, e.g., ISO 20653, DIN 40050-9, or IEC 60529).

The circuit 60 comprises a communication circuit 90. As used herein, the term "communication circuit" does not preclude that functions other than providing a communication functionality are fulfilled, provided that the circuit provides at least some communication functionality that allows appliance-related data to be transmitted via a wireless interface circuit. As will be described in more detail below, the circuit 60 may be operative to pass power to an appliance for operating or charging the appliance and/or to control a user interface provided on the power plug.

The circuit 60 may comprise one or several integrated circuits (ICs). The integrated circuits may be or may comprise one or several of an application specific integrated circuit (ASIC), a processor, a controller, a field-programmable gate array (FPGA), or combinations thereof. The ICs may comprise a communication chip or chipset for communication in accordance with an IEEE 802.11 standard (e.g., in conformity with IEEE 802.11-2012 or 802.11-2016), at least one further communication chip or chipset different from the IEEE 802.11 chip or chipset, and an IC that controls operation of the circuit, including performing data retrieval and/or transmitting functions and, optionally, control functions for a user interface.

The communication circuit 90 may comprise at least one wireless interface circuit for transmitting appliance-related data. The communication circuit 90 may optionally comprise one or several additional data interfaces for obtaining the appliance-related data. Alternatively, the same wireless interface circuit may be used for obtaining and transmitting appliance-related data.

The communication circuit 90 comprises a wireless interface circuit 92. The wireless interface circuit 92 may be operative for transmitting appliance-related data via a WLAN (e.g., WiFi) access point. The wireless interface 92 may be operative for transmitting appliance-related data via a WLAN access point to a server or computer 44 connected to a WAN 44.

The wireless interface circuit 92 may comprise an antenna 92'. The antenna 92' may be operative for transmitting, and optionally for receiving, in the 5 GHz and/or 2.4 GHz bands. The wireless interface circuit 92 may be a communication chip or chipset for communication in accordance with an IEEE 802.11 standard (e.g., in conformity with IEEE 802.11-2012 or 802.11-19.

The communication circuit 90 may comprise a control circuit 91. The control circuit 91 may be operative to control data transmission via the wireless interface circuit 92. The control circuit 91 may be operative to control storing of obtained appliance-related data in a memory 95. The control circuit 91 may be operative to control output of stored appliance-related data from memory 95 for transmission via the wireless interface circuit 92.

The memory 95 may be a non-volatile memory. The memory 95 may be operative for storing appliance-related data even in time periods in which the power plug 51 is not engaged with a mains outlet 41.

The communication circuit 90 may have a power supply input 98 and a power supply output 97. The power supply input 98 may be connected to an output of the converter 71 to receive power therefrom. The power supply input 98 may be coupled to a low-voltage side of the converter 71.

The communication circuit 90 may have a power supply output 99. The power supply output 99 may be electrically connected to conductors extending in power supply cable 54.

The communication circuit 90 may have conductors 97 that interconnect the power supply input 98 and the power supply output. The conductors 97 may be implemented as conductive traces. In operation of the power supply charging device, power is passed by the conductors 97 from the converter 71 to the appliance engaged with the connector 55.

The communication circuit 90 may comprise a power supply circuit 96. the power supply circuit 96 may be connected to the conductors 97 or may otherwise be connected to the power supply input 98. The power supply circuit 96 may be operative to provide a supply power for the wireless interface circuit 92, the control circuit 91, and, if present, a user interface 100.

The communication circuit 90 may comprise a user interface (UI) 100. The user interface 100 may be operative to output status information on the communication circuit 90. The user interface 100 may be operative to receive a user input that causes the communication circuit 90 to enter a configuration procedure that allows the communication circuit 90 to be configured for communication with, e.g., the access point 42 and/or computer or server 44. In response to actuation of an actuation element of the UI 100, the communication circuit 90 may establish a communication link to a programming device (such as the terminal 45) distinct from the power supply charging device, which allows at least one of parameters, addresses, keys, and/or identifiers to be configured, which allow(s) the communication circuit 90 to transmit appliance-related data to the access point 42 and/or computer or server 44.

Figure 7 is a schematic view of an implementation of a UI 100. The UI 100 may comprise at least one status indicator 102-105 operative to output status information related to the communication circuit 90. The at least one status indicator may comprise several light segments 102-105. The status indicator(s) may comprise one or several light-emitting elements 102-105. The status indicator(s) may comprise one or several LEDs 102-105. The status indicator(s) may comprise one or several LED-based light segments 102-105 that may be arranged partially or entirely around a circumference of an end face of the power plug 51, which may be opposite to the end face 64 from which the connector pins 52, 54 project. This allows several status indicators 102-105 to be integrated on a small area.

The UI 100 may comprise at least one actuation element 101 for operative to cause the circuit to enter a configuration mode 92. The actuation element 101 may comprise a physical actuation element. The actuation element 101 may comprise a button, which may be a soft button or hard button. The actuation element 101 may comprise a button arranged centrally in an area having a plurality (e.g., two, three, or more) of status indicators 102-105 arranged on its periphery.

The power supply charging device may be operative such that the control circuit 91 selectively activates one or several of the status indicators 102-105. The status indicators may be activated continually or in an intermittent manner (e.g., blinking) to provide status information, using the area available on the power plug. The control circuit 91 may be operative to activate one or several of the status indicators to indicate one or more of the following:
- the power supply charging device is in a configuration mode in which it is operative to be configured for communication with the access point 42 and/or computer or server 44;
- the power supply charging device is in the process of establishing a communication link with the access point 42 and/or computer or server 44;
- the power supply charging device has established a communication link with the access point 42 and/or computer or server 44;
- the power supply charging device captures appliance-related data (which may be implemented via the wireless interface circuit 92 or a communication interface different from the wireless interface circuit 92);
- the power supply charging device transmits appliance-related data.

One and the same indicator 102-105 may be operated differently to indicate different statuses. For illustration, one and the same indicator 102-105 may be operated in two different modes (blinking mode and continuous mode) to indicate two different states. For illustration, one of the status indicators may be operated in blinking mode to indicate that the power supply charging device is in the process of establishing a communication link with the access point 42 and/or computer or server 44, and in continuous mode to indicate that the power supply charging device has established a communication link with the access point 42 and/or computer or server 44.

The power supply charging device may capture appliance-related data from one or several appliance(s) (and not necessarily limited to an appliance which is being supplied with power). The power supply charging device may capture appliance-related data using the wireless interface 92. Alternatively or additionally, the power supply charging device may include one or several additional communication interface circuits for capturing the appliance-related data.

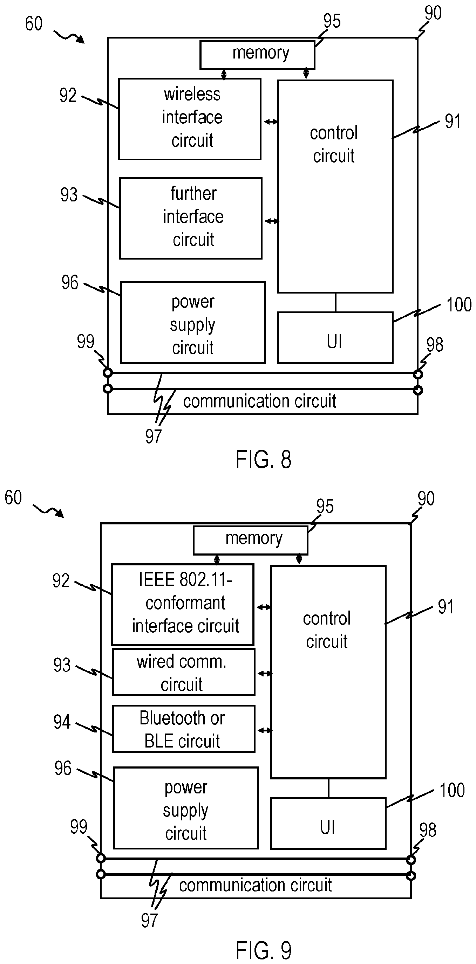

Figure 8 is a block diagram of a communication circuit 90 that may be used in a power supply charging device according to an embodiment. The communication circuit 90 comprises the wireless interface circuit 92 and, in addition, may comprise a further interface circuit 93. The wireless interface circuit 92 and further interface circuit 93 may be operative to provide communication capabilities that use different data carriers (e.g., different frequencies and/or different media, such as wired and wireless). The wireless interface circuit 92 may be operative for providing communication with the access point 42. The wireless interface circuit 92 may be operative for providing one- or bi-directional communication with the access point 42 that allows appliance-related data to be transmitted to the computer or server 44.

The further interface circuit 93 may be incapable of establishing communication link with the access point 42. The further interface circuit 93 may be operative to communicate with one or several appliances for obtaining, by the power supply charging device, the appliance-related data.

The further interface circuit 93 may but does not need to be implemented as a wireless circuit. More than one further interface circuit 93 may be provided, with at least one of the further interface circuit(s) 93 being a wireless circuit operative in accordance with a communication protocol different from that used by the wireless interface circuit 92. The power supply charging device may comprise both at least one further interface circuit(s) 93 that is a wireless circuit operative in accordance with a communication protocol different from that used by the wireless interface circuit 92 and a wired circuit operative to collect appliance related data via the conductors via which power is supplied to the appliance in field use.

The further interface circuit 93 may be operative for receiving data from a programming device, such as the terminal device 45, which provides access information for communication with the access point 42 and/or computer or server 44. For illustration, when the power supply charging device is set into a configuration mode (e.g., by actuation of the actuation element 101), the further interface circuit 93 may receive access information for the access point 42 (such as a name of a WLAN and a key) and/or for a protected storage area in the computer or server 44 (such as an identifier and/or passcode for a user-specific data repository region) from the terminal device 45 or another device that is selectively communicatively coupled with the communication circuit 90 for configuring the same.

The communication circuit 90 may be operative to store the obtained appliance-related data in memory 95. The communication circuit 90 may optionally be operative to process data obtained from one or several appliances prior to their transmission as appliance-related data. For illustration, the communication circuit 90 may be operative to aggregate data collected from one and the same appliance over an extended time period prior to the transmission as appliance-related data.

The communication circuit 90 may be operative to store the access information for the access point 42 (such as a name of a WLAN and a key) and/or for a protected storage area in the computer or server 44 (such as an identifier and/or passcode for a user-specific data repository region) in memory 95 for later use in transmitting the appliance-related data.

The wireless interface circuit 92 and the further interface circuit 93 may be implemented by different ICs, e.g. by different chips or chipsets.

Figure 9 is a block diagram of a communication circuit 90 that may be used in a power supply charging device according to an embodiment. The communication circuit 90 comprises the wireless interface circuit 92 a first further interface circuit 93, and a second further interface circuit 94. The wireless interface circuit 92, the first further interface circuit 93, and the second further interface circuit 94 may be operative to provide communication capabilities that use different data carriers (e.g., different frequencies and/or different media, such as wired and wireless). The wireless interface circuit 92 may be operative for providing communication with the access point 42. The wireless interface circuit 92 may be operative for providing one- or bi-directional communication with the access point 42 that allows appliance-related data to be transmitted to the computer or server 44.

The first further interface circuit 93 and the second further interface circuit 94 may be incapable of establishing communication link with the access point 42. The first further interface circuit 93 and the second further interface circuit 94 may be operative to communicate with one or several appliances for obtaining, by the power supply charging device, the appliance-related data. The first further interface circuit 93 and the second further interface circuit 94 may be complementary in the sense that one uses a wired communication technique (such as communication over the conductors in the power supply cable via which power is supplied to an appliance in field use) and the other uses a wireless communication technique (such as Bluetooth, Bluetooth Low Energy (BLE), or a machine-to-machine (M2M) communication protocol supported by a cellular standard, such as LTE or LTE-A).

In one implementation, the wireless interface circuit 92 may be operative to transmit data via a communication link with the access point 42 in accordance with an IEEE 802.11 (e.g., 802.11-12 or 802.11-19) conformant technique. The first further interface circuit 93 may be operative to obtain appliance-related data by reading data from an appliance using communication via the conductors in the power supply cable via which power is supplied to an appliance in field use. The second further interface circuit 94 may be operative to obtain appliance-related data by reading data from an appliance using a wireless communication technique different from IEEE 802.11 (such as Bluetooth, Bluetooth Low Energy (BLE), or a machine-to-machine (M2M) communication protocol supported by a cellular standard, such as LTE or LTE-A).

The first further interface circuit 93 may be operative for receiving data from a programming device, such as the terminal device 45, which provides access information for communication with the access point 42 and/or computer or server 44. For illustration, when the power supply charging device is set into a configuration mode (e.g., by actuation of the actuation element 101), the further interface circuit 93 may receive access information for the access point 42 (such as a name of a WLAN and a key) and/or for a protected storage area in the computer or server 44 (such as an identifier and/or passcode for a user-specific data repository region) from the terminal device 45 or another device that is selectively communicatively coupled with the communication circuit 90 for configuring the same.

Some or all of the circuit 90 may be arranged in a housing of the power-supply device 50. The converter 71 and communication circuit 90 may be provided in separate compartments having separate IPX ratings. For illustration, the converter 71 may be provided in a first compartment of the power plug that has an IPX rating that exceeds an IPX rating of a second compartment in which the communication circuit 90 is arranged. Alternatively, part or all of the communication circuit 90 may be provided separately from the power plug 50. For illustration, part or all of the communication circuit 90 may be arranged in the appliance power connector 55 or in a stand of a device that is operative to receive and support an appliance thereon.

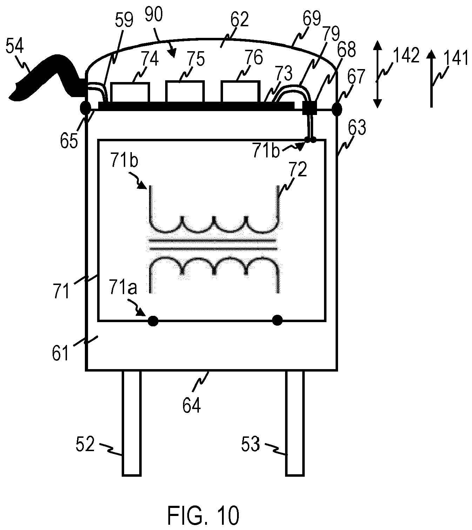

Figure 10 is a schematic partial view of the power supply charging device, showing a power plug 51 in which the converter 71 and communication circuit 90 are arranged.

The power plug 51 comprise a first compartment 61 and a second compartment 62 separated by a wall 65.

The first compartment 61 houses the converter 71. The converter 71 may comprise a transformer 72. converter 71 may be operative to perform a voltage down conversion. The converter 71 includes a galvanic separation. The converter 71 has a converter input 71a and a converter output 71b galvanically separated from the converter input 71a.

The converter 71 may be an AC/DC converter. The converter 71 may be a switched mode power supply (SMPS).

The first compartment 61 is surrounded and delimited by an enclosure 63. The enclosure 63 may provide waterproof characteristics according to at least IPX4 or greater (determined in accordance with, e.g., ISO 20653, DIN 40050-9, or IEC 60529). The wall 65 may be comprised by the compartment enclosure 63. The wall 65 may be integral with side walls extending between the wall and an end wall 64 from which the connection pins 52, 53 project. The wall 65 may be transverse, in particular perpendicular to, a direction 151 along which the connection pins 52, 53 extend.

The enclosure 63 that surrounds the first compartment 61 may be waterproof. For illustration, the enclosure 63 may comply with IPX4 or higher (determined in accordance with, e.g., ISO 20653, DIN 40050-9, or IEC 60529). A sealing arrangement 68 may be provided at a passage through which conductors 79 pass from the first compartment 61 through the wall 65. The sealing arrangement may be or may comprise a molding material 68 that is applied to prevent water ingress into the first compartment 61.

The second compartment 62 houses a communication circuit 90. As used herein, the term "communication circuit" does not preclude the communication circuit to fulfil functions other than providing a communication functionality, provided that the communication circuit provides at least some communication functionality that allows appliance-related data to be transmitted via a wireless interface circuit. As will be described in more detail below, the communication circuit may be operative to pass power to an appliance for operating or charging the appliance and/or to control a user interface provided on the power plug.

The communication circuit 90 may comprise one or several integrated circuits (ICs). The integrated circuits may be or may comprise one or several of an application specific integrated circuit (ASIC), a processor, a controller, a field-programmable gate array (FPGA), or combinations thereof. The ICs may comprise a communication chip or chipset for communication in accordance with an IEEE 802.11 standard (e.g., in conformity with IEEE 802.11-2012 or 802.11-2016), at least one further communication chip or chipset different from the IEEE 802.11 chip or chipset, and an IC that controls operation of the communication circuit, including performing data retrieval and/or transmitting functions and, optionally, control functions for a user interface.

The communication circuit 90 may comprise at least one wireless interface circuit for transmitting appliance-related data. The communication circuit 90 may optionally comprise one or several additional data interfaces for obtaining the appliance-related data. Alternatively, the same wireless interface circuit may be used for obtaining and transmitting appliance-related data.

The communication circuit 90 may comprise a first chip or chipset 74 that provides a wireless interface circuit for transmitting appliance-related data. The communication circuit 90 may comprise at least one second chip or chipset 75 that provides a wired or wireless interface circuit, allowing the communication circuit to receive data from one or several appliances. The communication circuit 90 may comprise at least one IC that may be operative to coordinate and control operation of the communication circuit 90.

The communication circuit 90 may comprise a circuit board 73. One or several ICs that include or provide wireless or wired communication interfaces may be mounted on the circuit board 73. Additional components, such as a circuit for powering the IC(s) using power supplied by the converter 71, may also be mounted on the circuit board 73.

The circuit board 73 may be affixed on the wall 65. The circuit board 73 may be affixed on the wall 65 using any suitable fixation mechanism. The circuit board 73 may be affixed on the wall 65 using adhesive, without being limited thereto.

The communication circuit 90 may comprise a power supply input connected to an output of the converter 71. The communication circuit 90 may comprise a power supply output connected to conductors 79 that extend through the cable 54 to electrical contacts in the connector 55. The communication circuit 90 may comprise a power supply output connected to conductors 59 of the power supply cable 54.

When the connector 55 is engaged with an appliance and the power plug 51 is engaged with the mains outlet 41, power may pass through the communication circuit 90 from the converter 71 to the appliance.

The second compartment 62 is delimited by an end cap 69 that may be engaged with the enclosure 63, e.g., at the wall 65. The connection between the end cap 69 and the enclosure 63 may but does not need to be waterproof. The second compartment 62 may have an IPX rating (determined in accordance with, e.g., ISO 20653, DIN 40050-9, or IEC 60529) that is less than that of the first compartment 61. The end cap 69 may be affixed by an ultrasonic weld 67, adhesive, or other affixing means.

The second compartment 62 may have a height 152, measured along direction 151 from the surface of the wall 65 to the point on the exterior surface of the end cap 69 that has the greatest distance from a plane defined by the surface of the wall 65 that faces away from the converter 71. The height 152 may be less than 1 cm, less than 0.9 cm, less than 0.8 cm, less than 0.7 cm, less than 0.6 cm, or less than 0.5 cm.

The sealing arrangement 68 may be implemented in various forms. Figure 3 shows an implementation in which the wall 65 includes a passage 81 through which at least one conductor 79 passes from the first compartment 61 to the second compartment 62. A sheath 82 may be affixed to or integrally formed with the wall 65 and may extend into the second compartment 62. The sheath 82 may form as a conduit in which conductors received in their respective conductor sheaths may be received in tight abutment. The sheath 82 may have resiliency to sealing act on the conductors in their conductor sheaths in a sealing manner. Alternatively or additionally, the sealing arrangement may be formed by a molding material 68 that is applied to seal the passage 81 against water ingress.

The power supply charging device 50 according to any embodiment may be operative to obtain appliance-related data for an appliance to which the power supply charging device 50 can supply power.

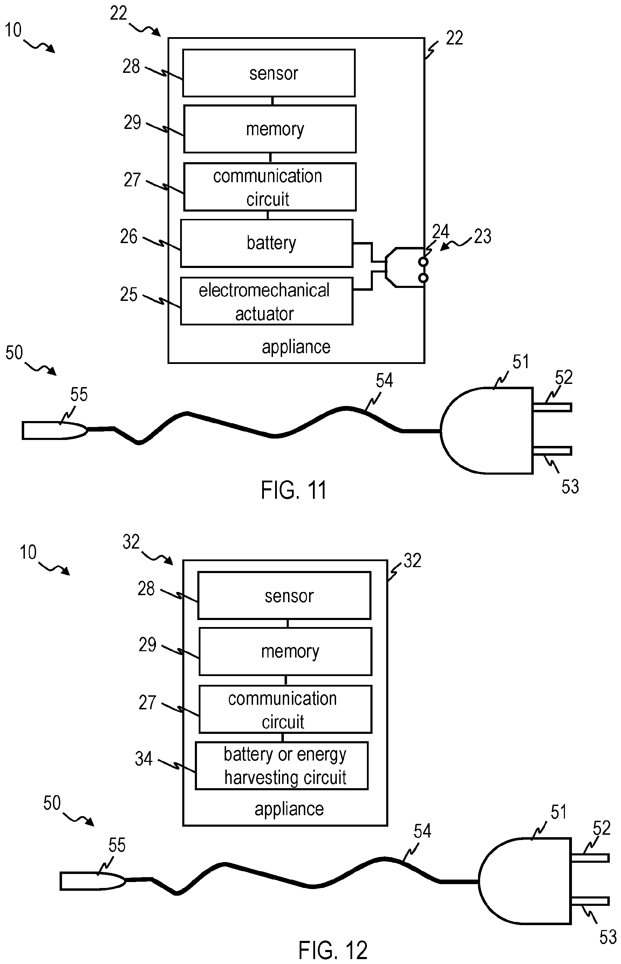

Figure 11 is a schematic view of a kit and system 10 that comprises the power supply charging device 50 and an appliance 20. The appliance may be a personal care appliance or another home appliance. The appliance 20 comprises a connector 23 operative for engagement with the appliance power connector 55 of the power supply charging device 50. The connector 23 may be a female connector. The connector 23 may comprise power terminals for receiving a DC voltage. The power terminals may be implemented as connector pins 24.

The appliance 20 comprises an electromechanical actuator 25. The actuator 25 may be operative to actuate at least one operation element that is displaceably supported on a housing 22 of the appliance 20. The actuator 25 may be operative in response to energy received via the connector 23 or, if present, from a battery 26.

The appliance 20 may comprise a battery 26 which may be rechargeable. When the battery 26 is provided, the appliance 20 may be configured such that not only the actuator 25 but also a communication circuit 27 and/or a sensor 28 and/or memory 29 may be supplied with power from the battery 26.

The appliance 20 may comprise a communication circuit 27. The communication circuit 27 may be operative to provide appliance-related data to the power supply charging device 50.

The power supply charging device 50 may use a push or pull mechanism to obtain the appliance-related data. The communication circuit 27 of the appliance may be operative to output the appliance-related data to the power supply charging device 50 responsive to a request from the power supply charging device 50.

The appliance-related data may be based, at least in part, on an output of the sensor 28. Sensor data may be stored in the memory 29 for subsequent retrieval and use by the power-supply device 50. Data read from the appliance 50 may include an identifier. The identifier may be a unique identifier for the appliance 20.

Figure 12 is a schematic view of a kit and system 10 that comprises the power supply charging device 50 and an appliance 32. The appliance 32 may be a personal care appliance or another home appliance. The appliance 32 is not operative for establishing an electrically conductive connection with the power supply charging device 50. The appliance 32 may be an appliance having a housing 33 without a power connector.

The appliance 32 may comprise a battery and/or an energy harvesting circuit 34. The battery and/or energy harvesting circuit 34 may be operative to power a communication circuit 27, a memory 29, and/or a sensor 28.

The energy harvesting circuit 34 may be operative to provide electric power to a battery, the communication circuit 27, the memory 29, and/or the sensor 28. This may be done responsive to received electromagnetic radiation. The power supply charging device 50 may be operative to generate electromagnetic radiation that is usable by the battery harvesting circuit 34 of the appliance 32.

The communication circuit 27 may be operative to provide appliance-related data to the power supply charging device 50.

The power supply charging device 50 may use a push or pull mechanism to obtain the appliance-related data. The communication circuit 27 of the appliance may be operative to output the appliance-related data to the power supply charging device 50 responsive to a request from the power supply charging device 50.

The appliance-related data may be based, at least in part, on an output of the sensor 28. Sensor data may be stored in the memory 29 for subsequent retrieval and use by the power-supply device 50.

Data read from the appliance 50 may include an identifier. The identifier may be a unique identifier for the appliance 32.

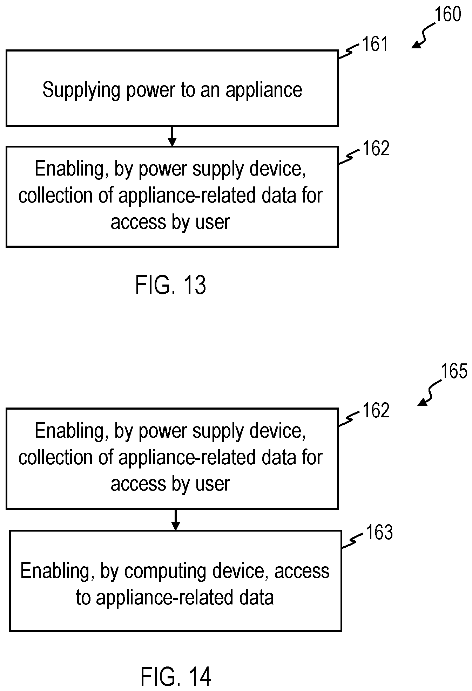

Figure 13 is a flow chart of a method 160. The method 160 may be performed automatically by the power supply charging device 50.

At step 161, the power supply charging device 50 may supply power to an appliance.

At step 162, the power supply charging device 50 may enable collection of appliance-related data for access by a user.

Step 162 may comprise:
- obtaining, by the power supply charging device, appliance-related data for the appliance to which it supplies power and/or one or several other appliances;
- transmitting, by the power supply charging device, the appliance-related data. The appliance may use configuration information that allows the power supply charging device to transmit the appliance-related data to a remote server or computer 44 for storing and/or processing.

Step 162 may be implemented using any one of the techniques described in detail above.

Figure 14 is a flow chart of a method 165. The method 165 may be performed automatically by the power supply charging device 50 and a remote computing device 44.

At step 162, the power supply charging device 50 may enable collection of appliance-related data for access by a user.

Step 162 may comprise:
- obtaining, by the power supply charging device, appliance-related data for the appliance to which it supplies power and/or one or several other appliances;
- transmitting, by the power supply charging device, the appliance-related data. The appliance may use configuration information that allows the power supply charging device to transmit the appliance-related data to a remote server or computer 44 for storing and/or processing.

Step 162 may be implemented using any one of the techniques described in detail above.

At step 163, the remote computing device 44 enables a user to access the appliance-related data or information derived therefrom.

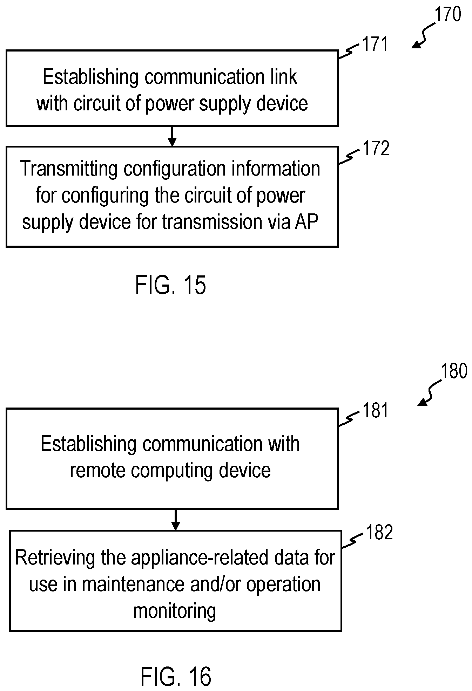

Figures 15 and 16 are flow charts of methods that may be performed by a user terminal, such as user terminal 45.

Figure 15 is a flow chart of a method 170 that may be performed by the user terminal 45 to enable the power supply charging device 170 to operate as a communication hub for appliances, such as personal care appliances.

At step 171, a communication link may be established between the user terminal 45 and the power supply charging device 50. The establishment of the communication link may be effected responsive to at least one user input action. The communication link may be established selectively responsive to one user input action at the power supply charging device 50 (such as actuation of an actuation element of the UI 100 that causes the power supply charging device 50 to enter a configuration mode) and responsive to another user input action at the user terminal 45 (such as confirming that the user intends to provide configuration information to a detected power supply charging device). The communication link may be a Bluetooth or BLE link. Actuation of the UI 100 to enter the configuration mode may cause the power supply charging device 50 to transmit, via at least one wireless interface, electromagnetic signals that allow the power supply charging device 50 to be detected (such as BLE or Bluetooth advertising, without being limited thereto).

At step 172, the user terminal 45 may transmit the configuration information to the power supply charging device 50 for storing and/or subsequent use in transmitting appliance-related data (without having to use the user terminal 45 for this subsequent transmission).

Some or all of the configuration information may be read from the user terminal 45 (such as access information for an access point 42 that may be stored in the general communication setting of the user terminal 45, or access information for the remote computing device 44 that may be stored in a dedicated instruction code (such as an app) executed on the user terminal 45). Some or all of the configuration information may be received, when the communication link is established at step 171, via a user interface of the user terminal 45.

The configuration information may include information that allows the power supply charging device 50 to transmit appliance-related data over a WLAN to a remote computer or server 44 that is connected to a WAN 43, such as the internet. The configuration information may include an identifier (e.g., a name) of an access point, such as a WLAN access point. The configuration information may include a key, password, or other safety code that is required for connecting, via the access point, to a WAN. For illustration, the configuration information may include a WPA key (which may be a WPA2 or WPA3 key) or other password for connecting to the access point.

Alternatively or additionally, the configuration information may include an identifier assigned to the user at the server or computer 44 (such as an account name) and/or a password required by the user for authentication at the server or computer 44.

Both information for connecting to the WAN 43 via the access point 42 and information for accessing a secured storage area located at or managed by the server or computer 44 may be received in the configuration information.

Figure 16 is a flow chart of a method 180 that may be performed by the user terminal 45 to access appliance-related data at the remote computing device 44 and/or to retrieve appliance-related data from the remote computing device 44. Accessing the appliance-related data at the remote computing device 44 and/or retrieving appliance-related data from the remote computing device 44 has the benefit that the data is consolidated in one location. The user can access and/or retrieve the appliance-related data using various terminal devices. The appliance-related data may also be accessed for servicing and/or maintenance purposes by, e.g., maintenance staff.

At step 181, a communication link may be established between the user terminal 45 and the remote computing device 44. The communication link may but does not need to be established via a WLAN having access point 42. The communication link may be established via a cellular network and/or via a LAN. Accessing and/or retrieving appliance-related data may require the user terminal 45 to perform an authentication. The authentication may be performed using an identifier assigned to the user at the remote computing device 44 (such as an account name) and/or a password required by the user for authentication at the remote computing device 44.

At step 182, the appliance-related data is retrieved. The user may retrieve the data for maintenance and/or operation monitoring of one or several appliances.

While devices have been described in detail in which the communication circuit 90 may be accommodated in a housing of the power plug 51 of a power supply charging device, other configurations are possible. Alternatively or additionally, while devices have been described in detail in which the power supply charging device 50 is a power cord, other configurations are possible.

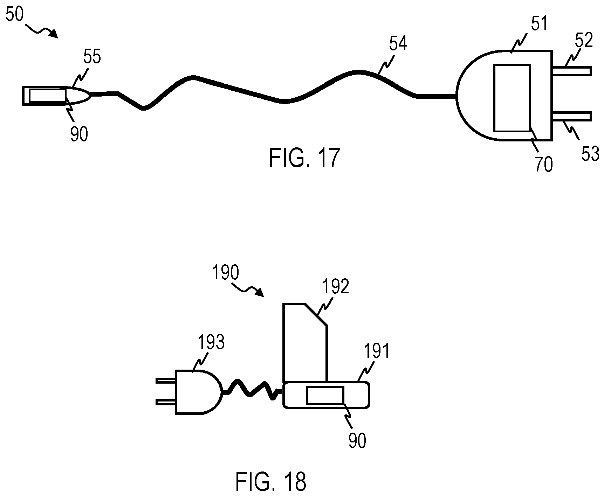

Figure 17 shows a power supply charging device 50 having a power plug 51 operative for engagement with a mains outlet and an appliance power connector 55. Part or all of the communication circuit 90 may be arranged in a housing of the appliance power connector 55. Power for powering an appliance may be passed through the communication circuit 90 during use.

Figure 17 shows a power supply charging device 50 having a power plug 51 operative for engagement with a mains outlet and an appliance power connector 55. Part or all of the communication circuit 90 may be arranged in a housing of the appliance power connector 55. Power for powering an appliance may be passed through the communication circuit 90 during use.

The power supply charging device may be implemented as a power cord, as shown in Figure 1. Figure 18 shows another power supply charging device 190. The power supply charging device comprises a plug 193 for engagement with a mains outlet, a support 191, and a stand 192 for receiving the appliance thereon. Part or all of the communication circuit 90 may be arranged in a housing of the support 191 and/or stand 192. Power for powering an appliance may be passed through the communication circuit 90 during use. The power supply charging device 190 may be operative to communicate with the appliance (using one- or bi-directional communication) via a further wireless interface circuit, such as the further wireless interface circuit 94. The power supply charging device 190 may be operative for inductively and/or capacitively charging the appliance.

Various effects and advantages are attained by the invention. The power supply charging devices, kits, systems, and methods facilitate the transmission of data collected by an appliance, in particular a personal care appliance. The power supply charging devices, kits, systems, and methods allow appliance-related data to be transmitted over a desired wireless communication standard (such as a member of the IEEE 802.11 standard family) without requiring (while still allowing) the appliance itself to have the required communication circuitry for that specific communication standard. The power supply charging device can be manufactured in an efficient manner.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A switched mode power supply charging device (50; 190) for charging a rechargeable battery of a personal care appliance (20, 30, 32), comprising:
connector pins (52, 53) operative for engagement with a mains outlet,
a power supply cable (54) comprising an appliance power connector (55),
a power plug housing (63, 69) from which the connector pins (52, 53) project, the power plug housing (63, 69) being attached to an end of the power supply cable (54) opposite to an end on which the appliance power connector (55) is provided, and
a circuit (60) comprising an AC/DC switched mode converter (71) and a wireless interface circuit (92), wherein the power plug housing (63, 69) houses the circuit (60), wherein the circuit (60) is operative to obtain appliance-related data for at least one personal care appliance (20, 30, 32) via at least one further communication interface (93, 94) different from the wireless interface circuit (92),and wherein the wireless interface circuit (92) is operative to transmit the appliance-related data .

2. The switched mode power supply charging device (50; 190) of claim 1, wherein the circuit (60) is operative to
obtain at least some of the appliance-related data for said personal care appliance (20, 30, 32) while the personal care appliance (20, 30, 32) is being engaged with the appliance power connector (55); and/or
obtain at least some of the appliance-related data for one or several second personal care appliances (20, 30, 32) while the appliance power connector (55) is engaged with a first personal care appliance (20, 30, 32) different from the one or several second personal care appliances (20, 30, 32).

3. The switched mode power supply charging device (50; 190) of any one of the preceding claims,
wherein the at least one further communication interface (93, 94) comprises
a wired communication circuit (93) operative to obtain the appliance-related data over conductors of the power supply cable (54) that are operative to supply power and/or
a further wireless interface circuit (94) different from the wireless interface circuit (92).

4. The switched mode power supply charging device (50; 190) of any one of the preceding claims, wherein the power supply charging device (50; 190) comprises a water-tight shell (63) from which the connector pins (52, 53) project, the water-tight shell (63) having an outer surface (65), the circuit (60) being mounted on the outer surface (65) of the water-tight shell (63),
optionally wherein the power supply charging device (50; 190) further comprises an enclosure (69) attached to the water-tight shell (63) in which the circuit (60) is arranged, further optionally wherein the enclosure (69) is an end cap attached to the water-tight shell (63).

5. The switched mode power supply charging device (50; 190) of any one of the preceding claims, wherein the circuit (60) has a configuration mode in which the wireless interface circuit (92) is configurable for a subsequent transmission of the appliance-related data.

6. The switched mode power supply charging device (50; 190) of claim 5, wherein the power supply charging device (50; 190) comprises a user interface (100) and the circuit (60) is operative to enter the configuration mode responsive to a user input action at the user interface (100), and/or
wherein in the configuration mode the circuit (60) is operative to receive configuration information required for the subsequent transmission of the appliance-related data to a remote computing device (44) via an access point (42), optionally wherein the circuit (60) is operative to receive the configuration information over the wireless interface circuit (92) or over a second wireless interface circuit (94) different from the wireless interface circuit (92).

7. A kit, comprising:
one or several personal care appliances (20, 30, 32); and
the switched mode power supply charging device (50; 190) of any one of the preceding claims, the power supply charging device (50; 190) being operative to transmit appliance-related data for the one or several of the personal care appliances (20, 30, 32).

8. The kit of claim 7, wherein the one or several personal care appliances (20, 30, 32) are selected from a group consisting of a hair cutting, trimming or removal appliances (20, 32) and oral care appliances (30).

9. The kit of claim 7 or claim 8, further comprising:
an access point (42) of a wireless local area network, WLAN, wherein the circuit (60) is operative to transmit the appliance-related data to a remote computing device (44) via the WLAN access point (42); and/or
a user terminal (45), wherein the circuit (60) is operative to receive from the user terminal (45) configuration information for the wireless interface circuit (92) that is required for a subsequent transmission of the appliance-related data to a remote computing device via an access point (42) of a wireless local area network, WLAN.

10. A method of obtaining and transmitting appliance-related data, the method being performed by a switched mode power supply charging device (50; 190) comprising connector pins (52, 53) operative for engagement with a mains outlet, a power supply cable (54) comprising an appliance power connector (55), and a circuit (60) comprising a wireless interface circuit (92), the method comprising:
obtaining, appliance-related data for at least one personal care appliance (20, 30, 32) via the power supply cable (54) and /or via at least one further communication interface (93, 94) different from the wireless interface circuit (92), and
transmitting, the appliance-related data over the wireless interface circuit (92).

11. The method of claim 10, further comprising supplying, by the power supply charging device (50; 190), power to at least one personal care appliance (20, 30, 32) engaged with the appliance power connector (55).

12. The method of claim 10 or claim 11, further comprising:
receiving, by the circuit (60), configuration information required for a subsequent transmission of the appliance-related data to a remote computing device (44) via an access point (42);
storing, by the circuit (60), the configuration information; and
accessing and using, by the circuit (60), the configuration information for transmitting the appliance-related data to the remote computing device (44) via the access point (42).

13. The method of any one of claims 10 to 12, wherein obtaining the appliance-related data comprises:
obtaining at least some of the appliance-related data for a personal care appliance (20, 30, 32) while the personal care appliance (20, 30) is being engaged with the appliance power connector (55); and/or
obtaining at least some of the appliance-related data for one or several second personal care appliances (30, 32) while the appliance power connector (55) is engaged with a first personal care appliance (20) different from the one or several second personal care appliances (30, 32).

14. The method of any one of claims 10 to 13, wherein the power supply charging device (50; 190) operates as a communication hub that obtains and transmits appliance-related data for several personal care appliances (20, 30, 32) to a computing device (44) while supplying power to one of the personal care appliances (20, 30, 32).
